(19) Europäisches Patentamt
European Patent Office
Office européen des brevets

(11) EP 0 757 706 B1

(12) # EUROPÄISCHE PATENTSCHRIFT

(45) Veröffentlichungstag und Bekanntmachung des Hinweises auf die Patenterteilung:
**12.08.1998 Patentblatt 1998/33**

(21) Anmeldenummer: **95918594.3**

(22) Anmeldetag: **24.04.1995**

(51) Int Cl.[6]: **C08L 51/04**, C08L 55/02, C08L 25/08

(86) Internationale Anmeldenummer:
**PCT/EP95/01535**

(87) Internationale Veröffentlichungsnummer:
**WO 95/29204 (02.11.1995 Gazette 1995/47)**

(54) **VERWENDUNG VON FORMMASSEN ZUR HERSTELLUNG VON FORMTEILEN MIT GUTER BESTÄNDIGKEIT GEGEN TEILHALOGENIERTE FLUORCHLORKOHLENWASSERSTOFFE**

USE OF MOULDING MATERIALS TO PRODUCE MOULDED ARTICLES WITH GOOD RESISTANCE TO PARTIALLY HALOGENATED CHLOROFLUOROCARBONS

UTILISATION DE MATIERES MOULABLES POUR LA PRODUCTION D'ARTICLES MOULES PRESENTANT UNE BONNE RESISTANCE AUX CHLOROFLUOROCARBURES PARTIELLEMENT HALOGENES

(84) Benannte Vertragsstaaten:
**BE CH DE ES FR GB IT LI NL**

(30) Priorität: **25.04.1994 DE 4414417**

(43) Veröffentlichungstag der Anmeldung:
**12.02.1997 Patentblatt 1997/07**

(73) Patentinhaber: **BASF AKTIENGESELLSCHAFT
67056 Ludwigshafen (DE)**

(72) Erfinder:
- **LINDENSCHMIDT, Gerhard
D-69181 Leimen (DE)**
- **ZELTNER, Doris
D-67354 Römerberg (DE)**
- **MORGENSTERN, Herbert
D-67158 Ellerstadt (DE)**
- **BRANDSTETTER, Franz
D-67435 Neustadt (DE)**

(56) Entgegenhaltungen:
**EP-A- 0 483 832**

- **DATABASE WPI Week 9310 Derwent Publications Ltd., London, GB; AN 93-080445 'freon resistant thermoplastic resins for mfg. refrigerators...' & JP,A,05 025 227 (MITSUBISHI RAYON CO. LTD) , 2.Februar 1993 in der Anmeldung erwähnt**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 757 706 B1

Printed by Jouve, 75001 PARIS (FR)

## Beschreibung

Die vorliegende Erfindung betrifft die Verwendung bestimmter Polymerisate zur Herstellung von Formteilen, die in Kontakt mit teilhalogenierten FCKW stehen.

Spannungsrißbeständiges Polystyrol und ABS-Polymerisate weisen eine Beständigkeit gegenüber FCKW auf, die für die meisten Anwendungen, bei denen entsprechende Formteile in direkten Kontakt mit FCKW kommen ausreicht.

Kühlgeräte, wie sie im privaten und gewerblichen Bereich Anwendung finden, weisen in der Regel eine Sandwichstruktur Kunststoffinnenbehälter/Isolierschicht/Metallgehäuse auf. Die Kunststoff- innenbehälter dieser Kühlgeräte werden überwiegend aus spannungsrißbeständigem Polystyrol oder sogenannten ABS-Polymerisaten hergestellt. Unter ABS-Polymerisaten sind dabei ganz allgemein Mischungen aus Styrol/Acrylnitril (SAN)-Polymeren einerseits und pfropfmischpolymerisaten mit einer Pfropfgrundlage aus Butadien-Kautschuken, auf die SAN-Polymere aufgepfropft sind, andererseits zu verstehen.

Die Herstellung der Kunststoffinnenbehälter erfolgt im allgemeinen durch Extrusion und anschließendes Thermoformen; beide Verfahren sind dem Fachmann bekannt und in der Literatur beschrieben. Der Kunststoffinnenbehälter steht in direktem Kontakt mit der Isolierschicht, die in der Regel aus Polyurethan-Schaum (PUR-Schaum) besteht, welcher unter Verwendung von bestimmten Treibmitteln hergestellt wird. Wurden in der Vergangenheit als Treibmittel überwiegend Fluorchlorkohlenwasserstoffe (FCKW) eingesetzt, so finden in jüngerer Zeit zunehmend sogenannte teilhalogenierte FCKW (HFCKW) wie z.B. 1,1-Dichlor-1-fluorethan (HFCKW-141 b) Verwendung, da diese eine geringere negative Wirkung auf die Ozonschutzschicht aufweisen. Diese neuen Treibmittel führen aber sowohl bei spannungsrißbeszändigem Polystyrol als auch bei ABS-Polymeren zu Spannungsrissen, Anlöseeffekten und sog. Blistern, was ein erhebliches Problem darstellt.

In der JP-A 25227/93 werden thermoplastische Formmassen zur Verwendung als Kühlschrankinnenauskleidung beschrieben, die Pfropfpolymerisate auf Basis von Acrylatkautschuken enthalten, deren mittlere Teilchengröße mindestens 150 nm beträgt. Diese können hinsichtlich der Gewichtsaufnahme bei der Einwirkung von teilhalogenierten FCKW nicht in vollem Umfang zufriedenstellen.

Auch die EP-A-0 483 832 offenbart thermoplastische Formmassen zur Verwendung als Kühlschrank innen aus kleidung, die Pfropf copolymerisate auf Basis von Acrylatkautschuken enthalten, deren Pfropfauflage überwiegend aus Acrylnitril besteht.

Aufgabe der vorliegende Erfindung war es daher, Produkte aufzuzeigen, die zur Herstellung von Formteilen geeignet sind, die in Kontakt mit HFCKW stehen, und die eine bessere Beständigkeit gegen diese HFCKW aufweisen als die bislang für derartige Anwendungen eingesetzten Polymere.

Diese Aufgabe wird erfindungsgemäß durch die Verwendung gemäß Anspruch 1 gelöst.

Bevorzugte Ausführungsformen der Erfindung sind den Unteransprüchen zu entnehmen.

Erfindungsgemäß verwendbar sind Formmassen, welche in der Komponente A eine Mischung zweier Polymerer $a_{11}$) und $a_{12}$) als Pfropfgrundlage enthalten.

Das Mischungsverhältnis der Polymeren $a_{11}$) und $a_{12}$) ist nicht kritisch, liegt aber im allgemeinen Bereich von 4:1 bis 1:4, insbesondere von 1:2 bis 2:1.

Die Acrylester-Polymerisate $a_{11}$) sind aufgebaut aus

$a_{111}$) 50 bis 99,9 Gew.-%, vorzugsweise 55-98 Gew.-%, eines Alkylacrylates mit 1 bis 10 C-Atomen im Alkylrest. Bevorzugte Acrylate sind solche mit 2 bis 10 C-Atomen im Alkylrest, insbesondere seien hier Ethylacrylat, tert.-, iso- und n-Butylacrylat und 2-Ethylhexylacrylat genannt, wovon die beiden letztgenannten ganz besonders bevorzugt werden.

Als vernetzend wirkende Monomere $a_{112}$), die in Mengen von 0,1-5, vorzugsweise 0,25 bis 4 und insbesondere 0,5 bis 3 Gew.-%, bezogen auf $a_{11}$) eingesetzt werden, seien beispielhaft polyfunktionelle Monomere mit mindestens 2 olefinischen, nichtkonjugierten Doppelbindungen genannt, von denen Divinylbenzol, Dialkylfumarat, Diallylphthalat, Triallylcyanurat, Trialkylisocyanurat, Tricyclodecenylacrylat und Dihydrodicyclopentadienylacrylat namentlich genannt seien. Besonders bevorzugt werden Tricyclodecenylacrylat und Dihydrodicyclopentadienylacrylat.

Als weitere Monomere $a_{113}$) können bis zu 49,9, vorzugsweise 5 bis 45 und insbesondere 10 bis 40 Gew.-% und $a_{111}$) copolymerisierbare Monomere aus der Gruppe der Vinylalkylether mit 1-8 C-Atomen im Alkylrest (z.B. Vinylmethylether, Vinylpropylether, Vinylethylether), Butadien, Isopren, Styrol, Acrylnitril, Methacrylnitril und/oder Methacrylnitril bei der Herstellung von $a_{11}$) verwendet werden.

Durch Verwendung solcher Comonomere läßt sich das Eigenschaftsprofil der Polymerisate $a_{11}$) z.B. hinsichtlich Vernetzungsgrad steuern, was in manchen Fällen wünschenswert sein kann.

Verfahren zur Herstellung von Polymeren $a_{11}$) sind dem Fachmann bekannt, und in der Literatur beschrieben, z. B. in der DE-PS 1 260 135. Entsprechende Produkte sind auch kommerziell im Handel erhältlich.

Als besonders vorteilhaft hat sich in einigen Fällen die Herstellung durch Emulsionspolymerisation erwiesen.

Die genauen Polymerisationsbedingungen, insbesondere Art, Dosierung und Menge des Emulgators werden vorzugsweise so gewählt, daß der Latex des Acrylsäureesters, der zumindest teilweise vernetzt ist, eine mittlere Teilchengröße (Gewichtsmittel $d_{50}$) im Bereich von etwa 50 bis 700, insbesondere von 100 bis 600 nm aufweist. Vorzugsweise

hat der Latex eine enge Teilchengrößenverteilung, d.h. der Quotient

$$Q = \frac{d_{90} - d_{10}}{d_{50}}$$

ist vorzugsweise kleiner als 0,5, insbesondere kleiner als 0,35.

Neben den Polymerisaten $a_{11}$) enthalten die Pfropfmischpolymerisate A) Butadienpolymerisate $a_{12}$) als zweite Pfropfgrundlage. Bei den Polymerisaten $a_{12}$) handelt es sich um Butadiencopolymerisate, die neben 60 bis 100, vorzugsweise 70 bis 99 Gew.-% Butadien noch zu zu 40, vorzugsweise 2 bis 30 Gew.-% weiterer copolymerisierbarer Monomerer enthalten können. Als solche sind die unter $a_{111}$) vorstehend beschriebenen Alkylacrylate als auch die Monomeren $a_{113}$) geeignet; wegen detaillierter Ausführungen sei auf die dortige Beschreibung verwiesen.

Der Anteil der Pfropfgrundlage $a_{11}$) mit $a_{12}$) am Pfropfpolymerisat A) beträgt 50 bis 90, vorzugsweise 55 bis 85 und insbesondere 60 bis 80 Gew.-%, bezogen auf das Gesamtgewicht von A).

Auf die Pfropfgrundlage $a_{11}$) und $a_{12}$) ist eine Pfropfhülle $a_2$) aufgepfropft, die durch Copolymerisation von

$a_{21}$) 60 bis 90 und insbesondere 65 bis 80 Gew.-% eines vinylaromatischen Monomeren, vorzugsweise Styrol oder substituierten Styrolen der allgemeinen Formel I

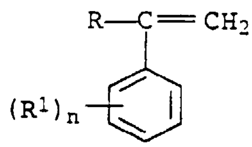

wobei R einen Alkylrest mit 1 bis 8 C-Atomen, ein Wasserstoffatom oder Halogen und $R^1$ Alkylreste mit 1 bis 8 C-Atomen oder ein Halogenatom darstellen und n den Wert 0, 1, 2 oder 3 hat, und

$a_{22}$) 10 bis 40 und insbesondere 20 bis 35 Gew.-% polaren copolymerisierbaren Monomeren Acrylnitril, Methacrylnitril, Ester der Meth(acrylsäure) mit 1 bis
4 C-Atomen im Alkylrest, Maleinsäureanhydrid, (Meth)acrylamid und/oder Vinylalkylether mit 1-8 C-Atomen im Alkylrest oder deren Mischungen

erhalten wird.

Die Pfropfhülle $a_{22}$) kann in einem oder in mehreren, z.B. zwei oder drei, Verfahrensschritten hergestellt werden, die Bruttozusammensetzung bleibt davon unberührt.

Vorzugsweise wird die Pfropfhülle in Emulsion hergestellt, wie dies z.B. in der DE-PS 1 260 135, DE-OS 32 27 555, DE-OS 31 49 357, DE-OS 31 49 358 und der DE-OS 34 14 118 beschrieben ist.

Je nach den gewählten Bedingungen entsteht bei der Pfropfmischpolymerisation ein bestimmter Anteil an freien Copolymerisaten von Styrol und Acrylnitril.

Das Pfropfmischpolymerisat ($a_1$ + $a_2$) weist im allgemeinen eine mittlere Teilchengröße von vorzugsweise 50 bis 1000 nm, insbesondere von 100 bis 700 nm ($d_{50}$-Gewichtsmittelwert) auf. Die Bedingungen bei der Herstellung des Elastomeren $b_1$) und bei der Pfropfung werden daher vorzugsweise so gewählt, daß Teilchengrößen in diesem Bereich resultieren. Maßnahmen hierzu sind bekannt und z.B. in der DE-PS 1 260 135 und der DE-OS 28 26 925 sowie in Journal of Applied Polymer Science, Vol. 9 (1965), S. 2929 bis 2938, beschrieben. Die Teilchenvergrößerung des Latex des Elastomeren kann z.B. mittels Agglomeration bewerkstelligt werden.

In einigen Fällen haben sich auch Mischungen aus mehreren Acrylester-Polymerisaten bewährt, die unterschiedliche Teilchengrößen aufweisen. Entsprechende Produkte sind in der DE-OS 28 26 925 und dem US-Patent 5,196,480 beschrieben, auf die hier wegen näherer Details verwiesen sei.

Demzufolge werden als bevorzugte Mischungen von Acrylesterpolymerisaten solche eingesetzt, in denen ein erstes Polymer eine Teilchengröße $d_{50}$ im Bereich von 50 bis 150 nm und ein zweites Polymer eine Teilchengröße von 200 bis 700 nm aufweist, wie sie in der bereits erwähnten US-PS 5,196,480 beschrieben werden.

Bei den Mischungen aus Polymeren $a_{11}$) (wie sie in der DE-AS 11 64 080, der DE-PS 19 11 882 und der DE-OS 31 49 358 beschrieben werden) und Polymeren $a_{12}$ weisen die Polymeren $a_{12}$) im allgemeinen eine mittlere Teilchengröße im Bereich von 50 bis 1000, vorzugsweise von 100 bis 700 nm auf.

Nachstehend seien einige bevorzugte Pfropfpolymerisate $a_{11}$) angeführt:

$a_2$/1: 60 Gew.-% Pfropfgrundlage $a_{21}$) aus

$a_{211}$) 98 Gew.-% n-Butylacrylat und
$a_{212}$) 2 Gew.-% Dihydrodicyclopentadienylacrylat und 40 Gew.-% Pfropfhülle $a_{22}$) aus
$a_{221}$) 75 Gew.-% Styrol und
$a_{222}$) 25 Gew.-% Acrylnitril

$a_2$/2: Pfropfgrundlage wie bei $a_2$/1 mit 5 Gew.-% einer Pfropfhülle aus

$a_{221}$) 12,5 Gew.-% Styrol (1. Pfropfstufe) und 40 Gew.-% einer zweiten Pfropfstufe aus
$a_{221}$) 75 Gew.-% Styrol und
$a_{222}$) 25 Gew.-% Acrylnitril

$a_3$/2: Pfropfgrundlage wie bei $a_2$/1 mit 13 Gew-.% einer ersten Pfropfstufe aus Styrol und 27 Gew.-% einer zweiten Pfropfstufe aus Styrol und Acrylnitril im Gewichtsverhältnis 3:1.

Als Komponente B) enthalten die erfindungsgemäßen Formmassen 30 bis 99, vorzugsweise 40 bis 80 Gew.-% eines Copolymerisats aus

$b_1$) 50 bis 99, vorzugsweise 55 bis 90 und insbesondere 65 bis 85 Gew.-% vinylaromatischen Monomeren, vorzugsweise Styrol und/oder substituierten Styrolen der allgemeinen Formel I und
$b_2$) 1 bis 50, vorzugsweise 10 bis 45 und insbesondere 15 bis 35 Gew.-% der für $a_{22}$) beschriebenen Monomeren.

Derartige Produkte können z.B. nach dem in den DE-AS 10 01 001 und DE-AS 10 03 436 beschriebenen Verfahren hergestellt werden. Auch im Handel sind solche Copolymere erhältlich. Vorzugsweise liegt der durch Lichtstreuung bestimmte Gewichtsmittelwert des Molekulargewichts im Bereich von 50.000 bis 500.000, insbesondere von 100.000 bis 250.000, was Viskositätszahlen im Bereich von 30 bis 130, vorzugsweise von 30 bis 100, entspricht (gemessen in 0,5 gew.-%iger Lösung in Dimethylformamid bei 25°C).

Als Komponente C können bis zu 20, vorzugsweise 0,5 bis 10 Gew.-% übliche Zusatzstoffe und Verarbeitungshilfsmittel enthalten sein.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, pulverförmige Füll- und Verstärkungsmittel, Weichmacher. Solche Zusatzstoffe werden in den üblichen wirksamen Mengen eingesetzt.

Die Stabilisatoren können den Massen in jedem Stadium der Herstellung der thermoplastischen Massen zugesetzt werden. Vorzugsweise werden die Stabilisatoren zu einem frühen Zeitpunkt zugesetzt, um zu verhindern, daß die Zersetzung bereits beginnt, bevor die Masse geschützt werden kann. Solche Stabilisatoren müssen mit der Masse verträglich sein.

Zu den Oxidationsverzögerern und Wärmestabilisatoren, die den thermoplastischen Massen gemäß der Erfindung zugesetzt werden können, gehören diejenigen, die allgemein zu Polymeren zugesetzt werden, wie Halogenide von Metallen der Gruppe I des Periodensystems, z.B. Natrium-, Kalium-, Lithium-Halogenide in Verbindung mit Kupfer-(I)-Halogeniden, z.B. Chlorid, Bromid oder Jodid. Ferner sind geeignete Stabilisatoren sterisch gehinderte Phenole, Hydrochinone, verschiedene substituierte Vertreter dieser Gruppe um Kombinationen derselben in Konzentrationen bis 1 Gew.-%, bezogen auf das Gewicht der Mischung.

Als Stabilisatoren kann man ebenfalls diejenigen, die allgemein zu Polymeren zugesetzt werden, in Mengen bis zu 2,0 Gew.-% auf die Mischung verwenden.

Beispiele für Stabilisatoren sind verschiedene substituierte Resorcine, Salicylate, Benzotriazole, 3enzophenone HALS-Stabilisatoren und dergleichen, wie sie unter den Handelsnamen Topanol® und Irganox® und Tinuvin® kommerziell erhältlich sind.

Geeignete Gleit- und Entformungsmittel, die z.B. in Mengen bis zu 1 Gew.-% der thermoplastischen Masse zugesetzt werden, sind Stearinsäuren, Stearylalkohol, Stearinsäureester und -amide.

Eine weiterer möglicher Zusatzstoff sind Siliconöle, vorzugsweise in Mengen von 0,05 bis 1 Gew.-%.

Ferner können zugesetzt werden organische Farbstoffe, wie Nigrosin, Pigmente, z.B. Titandioxid, Cadmiumsulfid, Cadmiumsulfid-selenid, Phthalocyanine Ultramarinblau oder Ruß.

Erfindungsgemäß werden die vorstehend beschriebenen Formmassen zur Herstellung von Formteilen verwender, die in Kontakt mit teilhalogenierten FCKW (sog. HFCKW) kommen. Zwei bekannte Vertreter dieser Substanzklasse sind 1.1-Dichlor-1-fluor-ethan (HFCKW 141 b) und 1,1-Dichlor-2,2,2-Trifluorethan (HFCKW 123).

Die Herstellung der Formteile bzw. Formkörper kann nach dem Fachmann an sich bekannten und in der Literatur

beschriebenen Verfahren wie Extrusion, Spritzguß, Blasformen und Thermoformen erfolgen, um nur einige zu nennen.

Die erfindungsgemäß erhältlichen Formteile zeichnen sich durch eine gute Spannungsrißbeständigkeit und eine gute Auslösebeständigkeit gegen HFCKW neben einer guten Verarbeitbarkeit aus und eignen sich daher für alle Anwendungen in Kontakt mit HFCKW, insbesondere zur Herstellung Innenbehälter in Kühlgeräten.

Beispiele

Es wurden folgende Komponenten eingesetzt:

$A_1$: Pfropfpolymerisat aus

60 Gew.-% einer Pfropfgrundlage aus
98 Gew.-% n-Butylacrylat und
2 Gew.-% Dihydrodicyclopentadienylacrylat

und

40 Gew.-% einer Pfropfhülle aus einem Copolymeren aus 75 Gew.-% Styrol und 25 Gew.-% Acrylnitril und einem mittleren Teilchendurchmesser $d_{50}$ von 100 nm

$A_2$: Pfropfmischpolymerisat aus

70 Gew.-% einer Pfropfgrundlage wie bei $A_1$
und
30 Gew.-% einer Pfropfhülle aus

70 Gew.-% Styrol und
30 Gew.-% Acrylnitril

mit einem mittleren Teilchendurchmesser $d_{50}$ von 250-350 nm

$A_3$: Pfropfmischpolymerisat aus

60 Gew.-% einer Pfropfgrundlage wie bei $A_1$ und $A_2$,
13 Gew.-% einer ersten Pfropfhülle aus Styrol und
27 Gew.-% einer zweiten Pfropfhülle aus einem Copolymeren aus 75 Gew.-% Styrol und 25 Gew.-% Acrylnitril mit einem mittleren Teilchendurchmesser $d_{50}$ von 500 nm

$A_4$: Pfropfmischpolymerisat aus

62 Gew.-% einer Pfropfgrundlage aus Butadien
und
38 Gew.-% einer Pfropfhülle aus 70 Gew.-% Styrol und 30 Gew.-% Acrylnitril

$A_5$: Pfropfmischpolymerisat mit 62 Gew.-% einer Pfropfgrundlage wie bei $A_4$,

13 Gew.-% einer ersten Pfropfhülle aus Styrol und
25 Gew.-% einer zweiten Pfropfhülle aus 70 Gew.-% Styrol und 30 Gew.-% Acrylnitril

$B_1$: Copolymerisat aus 65 Gew.-% Styrol und 35 Gew.-% Acrylnitril mit einer Viskositätszahl (VZ), gemessen in 0,5 gew.-%iger Lösung in Dimethylformamid bei 25°C, von 80 ml/g

$B_2$: Copolymerisat mit einer Zusammensetzung wie $B_1$, aber einer Viskositätszahl von 60 ml/g

$C_1$: Diisodecylphthalat (Palatinol®Z der BASF Aktiengesellschaft)

$C_2$: 1,1,3-Tri(2'-methyl-4'-hydroxin-5'-tert-butylphenyl)butan (Topanol® CA der ICI)

$C_3$: β,β-Thiodipropionsäuredilaurylester (Irganox® PS 800 der Ciba-Geigy AG)

$C_4$: n-Octadecyl-3-(3',5'-di-tert.butyl-4'-hydroxi-phenyl)propan (Irganox® 1076 der Ciba-Geigy AG)

Die Komponenten A, B und C wurden in den in der Tabelle angegebenen Mengen auf einen Extruder vermischt, extrudiert und granuliert. Aus dem Granulat wurden für die Bestimmung der Spannungsrißbeständigkeit bzw. des Anlöseverhaltens Prüfkörper bzw. Platten gepreßt bzw. durch Spritzguß hergestellt.

Zur Bestimmung der Spannungsrißbeständigkeit der Produkte gegen H-FCKW 123 wird der sog. Steinle-Test herangezogen. Zur Durchführung des Tests werden gepreßte bzw. gespritzte Schulterstäbe über einen Biegeradius von 170 mm gespannt und in einer H-FCKW 123-Atmosphäre bei 0,5 bar 10 min und 50 min gelagert. Anschließend wird sofort ein Zugversuch nach DIN 53 455 durchgeführt. Die eventuell auftretende Bildung von Spanrungsrissen im Material äußert sich in einem starken Abfall der Reißdehnung. Die entsprechenden Werte sind der Tabelle zu entnehmen.

Um die Anlösebeständigkeit der Materialien zu prüfen, wurde ein spezieller Test entwickelt. Als Prüfkörper werden gepreßte Platten mit einer Dicke von ca. 0,5 mm verwendet. Diese werden mit einer 2 mm dicken Zwischenlage aus Polyethylen auf einer Metallplatte befestigt. Die Anordnung wird mit der Prüfplatte nach unten auf ein Gefäß, das mit dem Treibmittel (HFCKW) gefüllt ist, gelegt. Auf der Metallplatte befindet sich Trockeneis, so daß die aufsteigenden H-FCKW 123-Dämpfe an der Kunststoffplatte kondensieren. Die Zwischenlage aus Polyethylen verhindert, daß hinter dem Prüfkörper eine Diffusionssperre vorhanden ist.

Nach dem Einwirken von 1 h, werden aus der Kunststoffplatte Scheiben mit einem Durchmesser von ca. 2,7 cm herausgestanzt, 10 min belüftet und danach gewogen. Durch die Belüftungszeit wird gewährleistet, daß auf der Platte befindlichen Treibmittel abdampfen kann. Die Platten werden 24 h bei 40°C getrocknet und dann nochmals gewogen. Durch Differenzbildung erhält man die Menge an aufgenommenem Treibmittel.

Die Blisterbildung wurde visuell beurteilt.

Die Ergebnisse sind der Tabelle zu entnehmen.

Tabelle

| Bsp. | Zusammensetzung A (Gew.-Tl.) | B (Gew.-Tl.) | (Gew.-Tl.) | Abfall Reißdehnung [in % gg. Ausgangswert] | Gewichtsaufnahme [Gew.-%] | Blisterbildung (visuell) |
|---|---|---|---|---|---|---|
| 1V | 42 $A_1$ | 58 $B_1$ | - | 0 | 11 | keine |
| 2V | 47 $A_3$ | 53 $B_1$ | - | 0 | 22 | keine |
| 3 | 17,5 $A_1$<br>15,8 $A_4$ | 36,05 $B_1$<br>30,65 $B_2$ | 1 $C_1$<br>0,1 $C_2$<br>0,2 $C_3$ | 0 | 5 | keine |
| 4 | 17,5 $A_1$<br>15,8 $A_4$ | 66,7 $B_1$ | 1 $C_1$<br>0,1 $C_2$<br>0,2 $C_3$ | 0 | 3 | keine |
| 5V | 28 $A_4$ | 72 $B_1$ | - | 73-100 | 1 | keine |
| 6 | 17,5 $A_1$<br>15,8 $A_5$ | 66,7 $B_1$ | 1 $C_1$<br>0,1 $C_2$<br>0,2 $C_3$ | 0 | 3 | keine |
| 7V | Polystyrol* | | | 45 | 65 | stark |

V = Vergleichsbeispiel * = handelsübliches spannungsrißbeständiges Polystyrol

**Patentansprüche**

1. Verwendung von Formmassen, enthaltend als wesentliche Komponenten

A) 1 bis 50 Gew.-%, bezogen auf das Gesamtgewicht der Formmasse, eines Pfropfmischpolymerisats, aufgebaut aus

$a_1$) 50 bis 90 Gew.-%, bezogen auf A) einer Pfropfgrundlage, aufgebaut aus

$a_{11}$) einem zumindest teilweise vernetzten Acrylester-Polymerisat gebildet aus

$a_{111}$) 50 bis 99,9 Gew.-%, bezogen auf $a_{11}$), mindestens eines Alkylacrylates mit 1 bis 10 C-Atomen im Alkylrest

$a_{112}$) 0,1 bis 5 Gew.-%, bezogen auf $a_{11}$), eines polyfunktionellen, vernetzend wirkenden Monomeren und

$a_{113}$) 0 bis 49,9 Gew.-%, bezogen auf $a_{11}$), eines weiteren mit $a_{111}$) copolymerisierbaren Monomeren aus der Gruppe der Vinylalkylether mit 1 bis 8 C-Atomen im Alkylrest, Butadien, Isopren, Styrol, Acrylnitril, Methacrylnitril und/oder Methylmethacrylat

und
$a_{12}$) einem Butadienpolymerisat, aufgebaut aus

$a_{121}$) 60 bis 100 Gew.-%, bezogen auf $a_{12}$) Butadien und

$a_{122}$) 0 bis 40 Gew.-%, bezogen auf $a_{12}$) weiterer copolymerisierbarer Monomeren aus der Gruppe der Vinylalkylether mit 1 bis 8 C-Atomen in der Alkylgruppe, Alkylacrylaten mit 1 bis 10 C-Atomen in der Alkylgruppe, Isopren, Styrol, Acrylnitril, Methacrylnitril und/oder Methylmethacrylat

$a_2$) 10 bis 50 Gew.-%, bezogen auf A), einer auf das Pfropfmischpolymerisat aufgepfropften Hülle, aufgebaut aus

$a_{21}$) 60 bis 90 Gew.-%, bezogen auf $a_{21}$), eines vinylaromatischen Monomeren,

$a_{22}$) 10 bis 40 Gew.-% polaren, copolymerisierbaren Comonomeren aus der Gruppe Acrylnitril, Methacrylnitril, Ester der (Meth)acrylsäure mit 1 bis 4 C-Atomen im Alkylrest, Maleinsäureanhydrid, (Meth)acrylamid und/oder Vinylalkylether mit 1 bis 8 C-Atomen im Alkylrest,

B) 30 bis 99 Gew.-%, bezogen auf das Gesamtgewicht der Formmasse, eines Copolymerisats aus

$b_1$) 50 bis 99 Gew.-% eines vinylaromatischen Monomeren und
$b_2$) 1 bis 50 Gew.-% Monomeren wie für $a_{22}$) beschrieben,

und

C) 0 bis 20 Gew.-% übliche Zusatzstoffe und Verarbeitungshilfsmittel

zur Herstellung von Formkörpern, die in Kontakt mit teilhalogenierten FCKW (HFCKW) kommen.

2. Verwendung nach Anspruch 1, wobei das Mischungsverhältnis von $a_{11}$) und $a_{12}$) im Bereich von 4:1 bis 1:4 liegt.

3. Verwendung nach Anspruch 1 oder 2, wobei die auf das Pfropfmischpolymerisat aufgepfropfte Hülle aus 65 bis 80 Gew.-% $a_{21}$) und 20 bis 35 Gew.-% $a_{22}$) aufgebaut ist.

4. Verwendung nach den Anprüchen 1 bis 3, wobei der Anteil der Pfropfgrundlage $a_{11}$) und $a_{12}$) am Pfropfmischpolymerisat A 55 bis 85 Gew.-%, bezogen auf das Gesamtgewicht von A beträgt.

**5.** Verwendung nach den Ansprüchen 1 bis 4 zur Herstellung von Innenbehältern in Kühlgeräten.

**Claims**

**1.** Use of a molding material containing, as essential components,

A) from 1 to 50 % by weight, based on the total weight of the molding material, of a graft copolymer composed of

$a_1$) from 50 to 90 % by weight, based on A), of a grafting base composed of

$a_{11}$) a partially or completely crosslinked acrylate polymer formed from

$a_{111}$) from 50 to 99.9 % by weight, based on $a_{11}$), of at least one alkyl acrylate where the alkyl radical is of 1 to 10 carbon atoms,

$a_{112}$) from 0.1 to 5 % by weight, based on $a_{11}$), of a polyfunctional, crosslinking monomer and

$a_{113}$) from 0 to 49.9 % by weight, based on $a_{11}$), of a further monomer which is copolymerizable with $a_{111}$) and is selected from the group consisting of the vinyl alkyl ethers where the alkyl radical is of 1 to 8 carbon atoms, butadiene, isoprene, styrene, acrylonitrile, methacrylonitrile and methyl methacrylate

and

$a_{12}$) a butadiene polymer composed of

$a_{121}$) from 60 to 100 % by weight, based on $a_{12}$), of butadiene, and

$a_{122}$) from 0 to 40 % by weight, based on $a_{12}$), of further copolymerizable monomers selected from the group consisting of the vinyl alkyl ethers where the alkyl group is of 1 to 8 carbon atoms, alkyl acrylates where the alkyl group is of 1 to 10 carbon atoms, isoprene, styrene, acrylonitrile, methacrylonitrile and methyl methacrylate and

a2) from 10 to 50 % by weight, based on A), of a shell grafted onto the graft copolymer and composed of

$a_{21}$) from 60 to 95 % by weight, based on $a_{21}$), of a vinylaromatic monomer and

$a_{22}$) from 10 to 40 % by weight of polar, copolymerizable comonomers selected from the group consisting of acrylonitrile, methacrylonitrile, esters of (meth)acrylic acid where the alkyl radical is of 1 to 4 carbon atoms, maleic anhydride, (meth)acrylamide and vinyl alkyl ethers where the alkyl radical is of 1 to 8 carbon atoms,

B) from 30 to 99 % by weight, based on the total weight of the molding material, of a copolymer of

$b_1$) from 50 to 99 % by weight of a vinylaromatic monomer and
$b_2$) from 1 to 50 % by weight of monomers as described for $a_{22}$)

and

C) from 0 to 20 % by weight of conventional additives and processing assistants

for the production of moldings which come into contact with partly halogenated CFCs (HCFCs).

**2.** Use as claimed in claim 1 or 2, wherein the mixing ratio of $a_{11}$) and $a_{12}$) is from 4:1 to 1:4.

**3.** Use as claimed in claim 1 or 2, wherein the graft grafted onto the graft copolymer is composed of from 65 to 80% by weight of $a_{21}$) and from 20 to 35% by weight of $a_{22}$).

**4.** Use as claimed in any of claims 1 to 3, wherein the amount of the grafting base $a_{11}$) and $a_{12}$) in the graft copolymer A is from 55 to 85% by weight, based on the total weight of A.

**5.** Use as claimed in any of claims 1 to 4 for the production of inner containers in refrigerators.

**Revendications**

**1.** Utilisation de masses à mouler, qui contiennent, à titre de composants essentiels,

A) 1 à 50% en poids, par rapport au poids total de la masse à mouler, d'un copolymère de greffage, constitué de

$a_1$) 50 à 90% en poids, par rapport à A), d'une base de greffage, formée de

$a_{11}$) un polymère d'ester acrylique au moins partiellement réticulé, constitué de

$a_{111}$) 50 à 99,9% en poids, par rapport à $a_{11}$), d'au moins un acrylate d'alkyle dont le radical alkyle comporte de 1 à 10 atomes de carbone,
$a_{112}$) 0,1 à 5% en poids, par rapport à $a_{11}$), d'un monomère polyfonctionnel, à activité réticulante et
$a_{113}$) 0 à 49,9% en poids, par rapport à $a_{11}$), d'un autre monomère copolymérisable avec $a_{111}$) appartenant au groupe des éthers vinylalkyliques dont le radical alkyle comporte de 1 à 8 atomes de carbone, du butadiène, de l'isoprène, du styrène, de l'acrylonitrile, du méthacrylonitrile et/ou du méthacrylate de méthyle

$a_{12}$) un polymère du butadiène, formé de

$a_{121}$) 60 à 100% en poids, par rapport à $a_{12}$), de butadiène et
$a_{122}$) 0 à 40% en poids, par rapport à $a_{12}$), d'autres monomères copolymérisables appartenant au groupe des éthers vinylalkyliques dont le radical alkyle comporte de 1 à 8 atomes de carbone, des acrylates d'alkyle dont le radical alkyle comporte de 1 à 10 atomes de carbone, de l'isoprène, du styrène, de l'acrylonitrile, du méthacrylonitrile et/ou du méthacrylate de méthyle,

$a_2$) 10 à 50% en poids, par rapport à A), d'une gaine ou enveloppe greffée sur le copolymère de greffage, constituée de

$a_{21}$) 60 à 90% en poids, par rapport à $a_{21}$), d'un monomère vinylaromatique,
$a_{22}$) 10 à 40% en poids de comonomères copolymérisables et polaires, appartenant au groupe de l'acrylonitrile, du méthacrylonitrile, des esters de l'acide (méth)acrylique dont le radical alkyle comporte de 1 à 4 atomes de carbone, de l'anhydride de l'acide maléique, du (méth)acrylamide et/ou des éthers vinylalkyliques dont le radical alkyle comporte de 1 à 8 atomes de carbone,

B) 30 à 99% en poids, par rapport au poids total de la masse à mouler, d'un copolymère formé de

$b_1$) 50 à 99% en poids d'un monomère vinylaromatique et
$b_2$) 1 à 50% en poids de monomères, tels que décrits à propos de $a_{22}$)

et
C) 0 à 20% en poids d'adjuvants de mise en oeuvre et d'additifs usuels,

en vue de la fabrication d'articles moulés qui entrent en contact avec des FCKW (HFCKW) partiellement halogénés.

**2.** Utilisation suivant la revendication 1, où le rapport de mélange de $a_{11}$) et de $a_{12}$) varie de 4:1 à 1:4.

**3.** Utilisation suivant la revendication 1 ou 2, où la gaine ou l'enveloppe greffée sur le copolymère de greffage est constituée de 65 à 80% en poids de $a_{11}$) et de 20 à 35% en poids de $a_{22}$).

**4.** Utilisation suivant la revendication 1 à 3, où la fraction de la base de greffage $a_{11}$) et $a_{12}$) du copolymère de greffage A atteint de 55 à 85% en poids, par rapport au poids total de A.

5. Utilisation suivant les revendications 1 à 4, pour la fabrication des récipients internes dans les appareils de refroidissement ou de réfrigération.